# EUROPEAN PATENT APPLICATION

(11) **EP 1 180 322 A2**
(43) Date of publication of application: **20.02.2002**
(21) Application number: 01306929.9
(22) Date of filing: 14.08.2001
(51) Int. Cl.: A01F 29/14, A01D 45/06

(54) **An improved agricultural machine for cutting crops, and a method of harvesting**

(30) Priority: 16.08.2000 GB 0020057
(71) Applicant: Malpas Tractors (Wrexham) Limited, Wrexham LL13 9XS (GB)
(72) Inventor: Reeves, Edward, Malpas, Cheshire (GB); Reeves, Paul, Malpas, Cheshire (GB); Roberts, John, Llansantffraid, Powys SY22 6DF (GB); Suckley, Nigel, Gobowen, Nr.Oswestry SY10 7BX (GB)
(74) Representative: Lees, Kate Jane

(57) **Abstract**

A method and agricultural machine for harvesting a fibre crop, such as hemp, wherein the crop is cut into sections of between 100mm - 900mm in length, left to ret and then baled. The machine has a cutterhead (14) with three blades that is rotated at a reduced speed of 200 - 300 rpm relative to a conventional harvesting machine to provide the required chop length. The reduction in speed of rotation is achieved by means of a transmission gearbox (2) that provides a reduction ratio of between 5:1 and 6:1.

## Description

The present invention relates to an improved agricultural machine for cutting crops, and to a method of harvesting, particularly but not exclusively for harvesting fibre crops such as hemp or flax.

Hemp is the world's strongest natural fibre and has been used for thousands of years in the production of rope and cloth. Hemp may be used to make most things that are currently made of cotton, timber or petroleum. Cloth produced from hemp is stronger, longer lasting and cheaper to produce than cloth made of cotton. Hemp may also replace wood fibre for the production of paper and may be used to produce such diverse articles as clothing, cosmetics, foods, textiles and fuel.

Industrial hemp has the additional benefit of being more environmentally friendly than the majority of other raw materials. For example, the growth of cotton typically uses a large amount of chemicals that are harmful to the environment whereas hemp requires less fertiliser and pesticides than most commercial crops. The growth of cotton is also limited to particular geographical locations having a suitable climate. In contrast, hemp grows in wide variety of climates and soils.

The demand for industrial hemp is beginning to increase following a period of poor publicity due to the plant containing a small amount of the psychoactive component of marijuana. The need for more environmentally friendly methods of providing food, fuels and clothing has increased the desirability of hemp and its demand is likely to increase substantially in the future.

However, the production of industrial hemp has its drawbacks in that it is difficult and time-consuming to harvest. This is because the crop has extremely strong fibres requiring a great deal of effort to be employed in cutting away the crop near ground level. Previously, the crop has been harvested using a mower that cuts the crop close to ground level (approximately 20mm from ground level). The long sections of the cut hemp are then left on the ground for around two months to ret wherein the weather breaks down and softens the hemp. The hemp is then gathered into large bales and transported to a factory for storage and further processing. This process is time-consuming and the large size of the cut hemp causes problems with the transportation and storage of the harvested crop.

It is an object of the present invention to provide an improved method of harvesting a crop, such as fibre crops, for example hemp or flax, that aims to overcome the abovementioned drawbacks.

It is a further object of the present invention to provide an improved agricultural machine, particularly but not exclusively for harvesting fibre crops, for example hemp or flax, that aims to overcome the abovementioned drawbacks.

Accordingly, a first aspect of the present invention provides a method of harvesting a crop, particularly but not exclusively for harvesting hemp, the method comprising the steps of cutting the crop into sections of at least 100mm in length, leaving the cut crop to ret and baling the crop. The maximum length of the cut crop sections is 900mm.

A second aspect of the present invention provides an agricultural machine for cutting a crop, the machine comprising a power driven shaft linked to a cutterhead for cutting the crop, wherein the machine is adapted to drive the shaft to effect rotation of the cutterhead at a reduced speed of 200 to 300 rpm relative to a conventional agricultural crop cutting machine.

More preferably, the crop is cut to a length of 300mm to 600mm, especially 330mm to 410mm. The cutting of the crop, such as hemp, into shorter lengths than is achieved with the prior method of harvesting enables the crop to ret quickly, thereby dramatically reducing the time taken to harvest the crop. Preferably, the crop is left to ret prior to baling the crop. The speed of rotation of the cutterhead is reduced compared to harvesters that are used for cutting grass crops to enable cutting of the crop into sections of the required chop length.

The machine may be constructed to permanently provide the required output for rotation of the cutterhead at the appropriate speed or may be convertible from a conventional machine, such as a self-propelled forage harvester, having a speed of rotation higher than that required to a machine having a reduced speed of rotation suitable for cutting crop sections of the required length for leaving on the ground to ret.

More preferably, the machine is adapted by connecting the drive shaft to a transmission gearbox to provide the required transmission ratio reduction. Preferably a reduction ratio of between 5:1 and 6:1, more preferably 6:1, is provided by the gearbox thereby reducing the speed of rotation of the cutterhead. The transmission gearbox is preferably provided with a clutch mechanism and preferably provides a reduced speed of rotation of the cutterhead of between 200 to 300 rpm to cut the crop. However, the transmission ratio reduction provided will be dependent upon the required section length of the cut crop. For example, a gearbox providing a transmission ratio reduction of 6:1 may be used. With such a reduction, the speed of rotation would be 220 rpm, resulting in a chop length of between 18 and 20 inches (45 - 51cm).

Preferably, the shaft is driven by the engine of the machine. Alternatively, a separate motor may be used to drive the shaft.

In order that the gearbox may be held in place in a sufficiently stable manner, it is preferable that a suitable means of mounting the gearbox of the machine is provided. Preferably, the gearbox mounting means comprises a front mounting means and a rear mounting means.

Additionally, it is preferable to provide a further gearbox connected to feed rollers that supply crop to the cutterhead for assisting in controlling the length of chop of the crop.

It is to be appreciated that a kit of parts may be provided for temporarily adapting a conventional harvester into one having a reduced speed of rotation of the cutterhead for cutting a fibre crop.

A third aspect of the present invention provides a method of adapting a conventional harvester to a harvester suitable for cutting a fibre crop, the method comprising the steps of removing a main drive shaft from the harvester, replacing the shaft with a smaller length shaft relative to the main drive shaft and connecting the shaft to a gearbox for reduction in the output of the shaft.

The belts and pulleys that drive the shaft are adapted accordingly to provide the required reduction in the speed of rotation of the cutterhead that is driven by the shaft.

Preferably, the cutterhead is provided with less than five blades, more preferably three cutting blades to assist in effective cutting of the crop into sections of the desired length.

Additionally, the machine may be provided with means for automatic sharpening of the blades of the cutterhead. In this respect, the conventional method of sharpening by reversal of the cutterhead driven by the main shaft connected to the engine is not possible due to the reduced output of the shaft. Conventionally, rotation speeds of at least 800 rpm are required for reversal of the cutterhead to effect sharpening of the blades. Accordingly, the machine is preferably provided with a separate motor linked to the side of the cutterhead remote from the main drive shaft that provides a high speed of rotation for reversal of the cutterhead by means of a reverse gearbox. The motor may again be a permanent feature of the harvester or may be provided in kit form for adaptation of a conventional forage harvester. Preferably, sensors are provided on the cutterhead for monitoring its speed of rotation. Once a speed of at least 800 rpm is achieved, the cutterhead may be engaged (either manually or automatically) with the sharpening means.

More preferably still, a means of mounting the sharpener and the motor is provided, the mount preferably having slotted holes thereon to enable the sharpeners to be adjusted in position.

The harvester may be a pull-type harvester or, more preferably, is a self-propelled harvester.

For a better understanding of the present invention and to show more clearly how it may be carried into effect reference will now be made by way of example only to the accompanying drawings, in which:-
Figure 1 shows a self propelled agricultural machine for cutting hemp or other fibre crop according to one embodiment of the present invention;
Figure 2 shows a side view of a front gearbox mounting means according to one embodiment of the present invention;
Figure 3 shows a top plan view of a front gearbox mounting means according to one embodiment of the present invention;
Figure 4 shows an end view of a front gearbox mounting means according to one embodiment of the present invention;
Figure 5 shows a side view of a rear gearbox mounting means according to one embodiment of the present invention;
Figure 6 shows a top plan view of a rear gearbox mounting means according to one embodiment of the present invention;
Figure 7 shows an end view of a rear gearbox mounting means according to one embodiment of the present invention;
Figure 8 shows a top plan view of a motor mounting plate according to one embodiment of the present invention;
Figure 9 shows a side view of a motor mounting plate according to one embodiment of the present invention;
Figure 10 shows a side view of a sharpener support bracket according to one embodiment of the present invention;
Figure 11 shows a plan view of a sharpener support bracket according to one embodiment of the present invention; and
Figure 12 shows a side view of a sharpener according to one embodiment of the present invention.

A conventional self-propelled forage harvester for cutting grass crops such as maize is provided with an engine that, via a system of pulleys and belts, drives a main shaft that passes through substantially the whole length of the machine. The shaft drives a cutterhead situated at the front of the harvester at a speed of approximately 1100 rpm. The shaft is generally linked to a gearbox that drives the cutterhead. The cutterhead is provided with six blades and a shearbar is provided that is associated with the blades. Rollers are provided to feed the cutterhead with crop material from the header. The cut crop is then collected by means of a blower and transferred to a collecting receptacle. This type of machine was found to be unsuitable for the harvesting of industrial hemp and other fibre crops such as flax due to a section length being required that is short enough to allow rapid retting and convenient baling of the crop but long enough to prevent the desired fibrous material being lost. In contrast, grass crops may be cut into very short sections using a fast speed of rotation of the cutterhead. Accordingly, a modified harvester was developed.

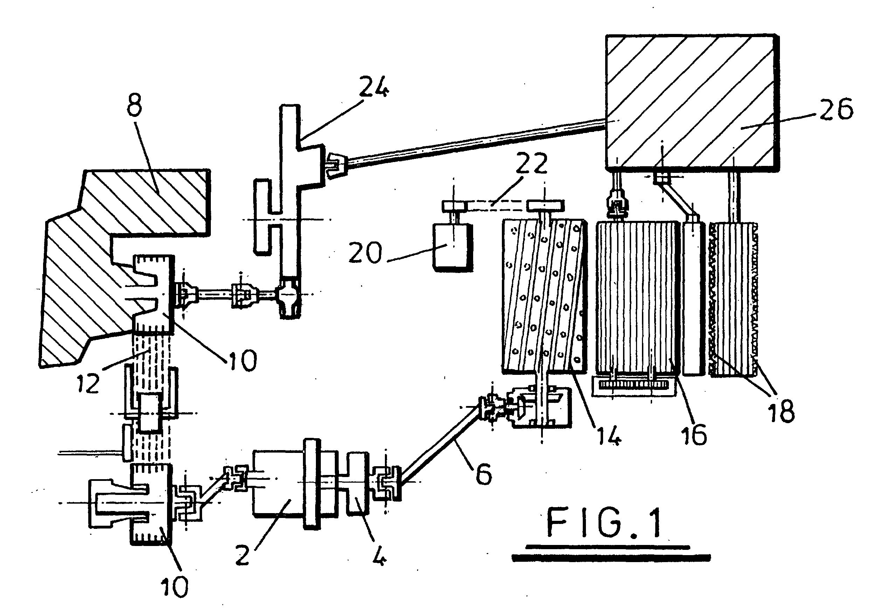

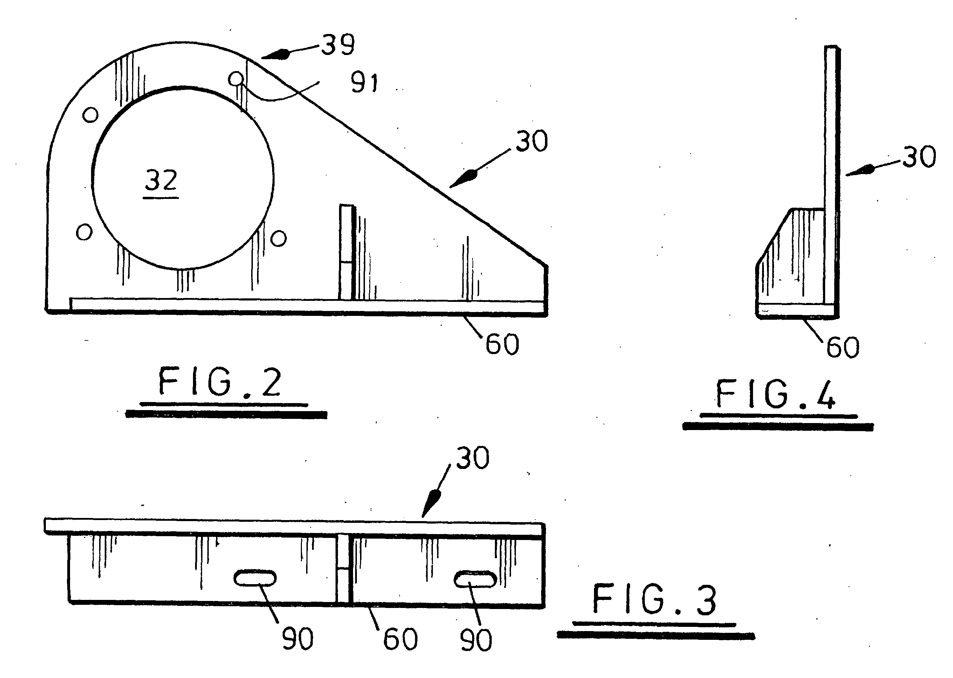

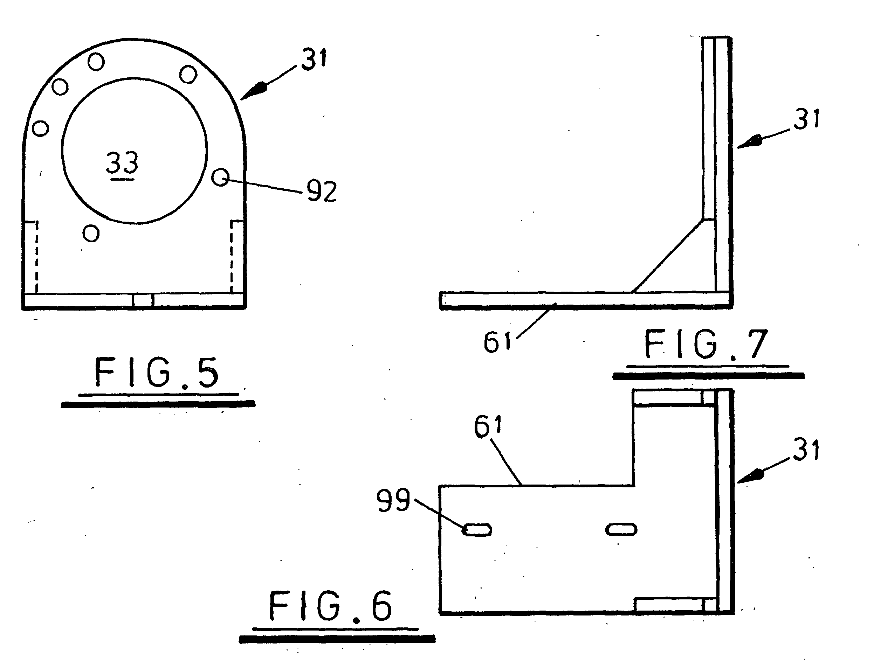

The modified machine according to the present invention has a reduced speed of rotation of the cutting blades to enable complete severance of the crop into shorter length sections. Previously, crops had been cut into long length sections by a mower which necessitated a large time period for the cut crop to ret prior to baling. With reference to Figure 1 of the drawings, the reduction in speed of rotation has been achieved by the replacement of the main drive shaft with a transmission gearbox 2, mounted on a gearbox mounting means (see Figures 2 to 7) and clutch 4 linked to a shaft 6. The shaft is driven by the engine 8, via a system of pulleys 10 and belts 12. The shaft 6 imparts motion to the cutterhead 14 for driving rotation of the cutting blades on the cutterhead and the feed rollers 16, 18. A further gearbox 26 for controlling the length of chop is connected to the feed rollers. The transmission gearbox provides reduction in power output of between 5:1 and 6:1, resulting in a reduced speed of between approximately 200rpm and 300 rpm on the output side of the gearbox rather than an output of 1100 rpm that is obtained with a conventional grass crop forage harvester. The reduction results in the cutterhead being driven at around 200 to 300 rpm.

The number of blades of the cutterhead is also reduced from six to three. This results in satisfactory cutting of the crop, such as hemp, into lengths of 330mm to 410mm. Additionally, the trough and blower system that would normally transfer the cut crop to a collecting receptacle is removed to allow the short sections of the fibre crop to remain on the ground where they are left to ret. The shorter sections of the crop ret quickly and may be gathered into smaller bales using a conventional large rectangular baler in approximately half the usual time.

The gearbox and clutch is an important feature of the machine according to the present invention. Without it, too much load would be placed on the components of the machine resulting in the parts failing. The incorporation of the gearbox to provide a reduction in the output of the main drive shaft enables the machine to withstand cutting of the hemp and have a satisfactory life span.

With reference to Figures 2 to 7, the gearbox mounting means comprises a front mounting means 30 and a rear mounting means 31. The front mounting means 30 is of an elongated shape, rounded at one end, and with one edge sloping downwardly from the rounded part 39 for added stability, and having a substantially flat base, with a flange 60 thereon for attachment purposes. The flange 60 has a plurality of slotted attachment holes 90 thereon. The rounded part 31 has an aperture 32, in which a part of the gearbox 2 may be held. The rear mounting means 31 is of a rounded shape, having an aperture 33, in which another part of the gearbox 2 may be held, and a substantially flat base, with a flange 61 for attachment purposes thereon. The flange 61 has a plurality of slotted attachment holes 99 thereon. Together, the front 30 and rear 31 mounting means retain the gearbox in a steady configuration, to give optimum performance thereof. The front 30 and rear 31 mounting means have a plurality of fixing holes 91 and 92 respectively thereon, for attachment purposes.

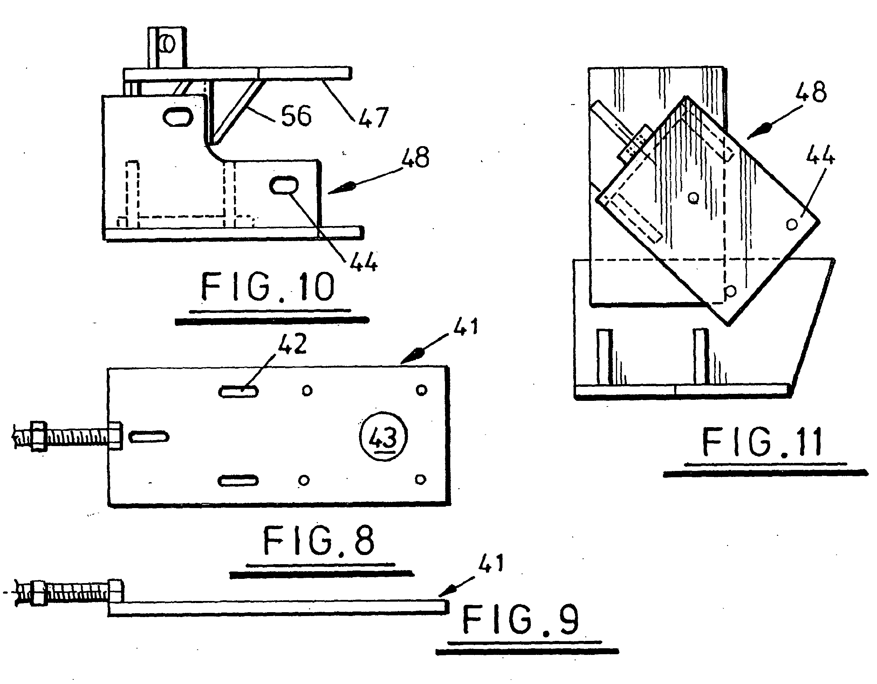

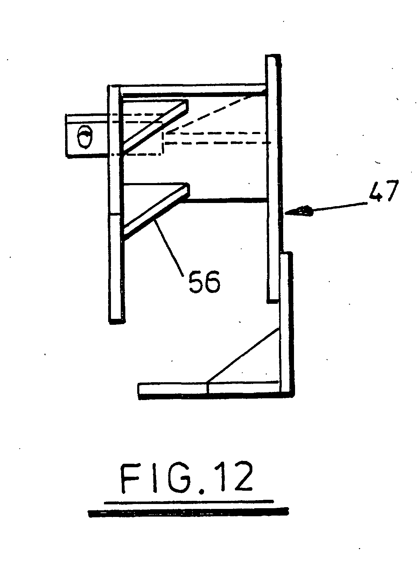

The apparatus of the present invention may also include a mechanism for automatically sharpening the blades of the cutterhead. The sharpener 47 and motor 20 may be mounted on a sharpener and motor mounting means (see Figures 8 to 12). In this respect, the blades must be kept extremely sharp to enable satisfactory cutting of the hemp or other fibre crop and thus require frequent sharpening. With machines for cutting grass crops this has been accomplished by reversing the cutterhead and moving a sharpening stone into the path of the blades to effect sharpening thereof. Sensors are provided on the cutterhead that monitor the speed of rotation of the blades. The blades must be rotating at a speed of at least 800 rpm before the sharpening stone may be engaged with the blades of the cutterhead. However, due to the reduced speed of the output shaft in the modified harvester, simple reversal of the cutterhead is not sufficient since a speed of 800 rpm is never achieved. In order to overcome this problem, a separate motor 20 is mounted on the side of the cutterhead remote from the shaft 6 that, via a pulley and belt system 22, drives the rotation of the cutterhead to enable the correct speed to be obtained (see Figure 1). Once reverse rotation of the cutterhead reaches a speed of 800 rpm_(by means of the reverse gearbox 24) a monitor in the cab of the machine informs the operator that the sharpening stone may be engaged with the blades and he presses a button to move the stone into position. If the correct speed has not been achieved, the button remains in a deactivated state preventing engagement of the stone with the blades.

With reference to Figures 8 to 12, the sharpener and motor mounting means 40 comprises a motor mounting plate 41 with a plurality of slotted holes 42 therein and a sharpener support bracket 48. The motor mounting plate 41 comprises an aperture 43, whereby the motor 20 may be mounted therein. The sharpener support bracket 48 comprises a plurality of holes 44, which correspond with the slotted holes 42 on the motor mounting plate 41, whereby the sharpener 47, with sharpener blades 56, is mounted on the support bracket 48, and may be adjusted, by way of the slotted holes, relative to the motor 20.

The machine and method of harvesting according to the present invention provide a number of advantages over the prior art. The fibre crop, such as hemp is satisfactorily cut into smaller sections to reduce the time required for the crop to ret and enable easier and cheaper transportation, processing and storage of the harvested hemp. The effort involved in harvesting the hemp is also reduced, thereby saving on manpower. Furthermore, the ability to adapt a conventional grass crop harvester into one for harvesting hemp enables the harvesting of hemp to be a break crop that can be grown and harvested between the harvesting of grass crops. This will enable farmers and/or contractors of farming machinery to increase the return obtained from their land and/or machinery.

Furthermore, the ability to sharpen the blades of the cutterhead automatically under the control of the operator, whether by a partly automated process or a fully automated process, greatly reduces the time and effort expended in harvesting the hemp crop. For example, the operator may have to alter the bolts of the cutterhead only, the actual process of sharpening the blades being done in an automatic process. Alternatively, the whole process may be automated, in that the user may not have to leave the cab at all in order to sharpen the blades, the whole process being done by computer means.

## Claims

1. An agricultural machine for cutting a fibre crop, the machine comprising a power driven shaft (6) linked to a cutterhead (14) for cutting the crop, **characterised in that** the machine is adapted to drive the shaft to effect rotation of the cutterhead at a reduced speed of 200 to 300 rpm relative to a conventional agricultural crop cutting machine.

2. An agricultural machine as claimed in claim 1, wherein the cutterhead (14) cuts the crop to a length between 100mm and 900mm.

3. An agricultural machine as claimed in claim 1 or claim 2 wherein the machine is adapted to provide the required rotation of the cutterhead (14) by connecting the drive shaft (6) to a transmission gearbox (2) and clutch (4) to provide the required transmission ratio reduction.

4. An agricultural machine as claimed in claim 3 wherein a reduction ratio of between 5:1 and 6:1 is provided by the gearbox (2) to provide the reduced speed of rotation of the cutterhead (14).

5. An agricultural machine as claimed in any one of the preceding claims wherein the drive shaft (6) is driven by the engine (8) of the agricultural machine.

6. An agricultural machine as claimed in any one of claims 1 to 4 wherein the drive shaft (6) is driven by a separate motor.

7. An agricultural machine as claimed in any one of the preceding claims wherein a gearbox mounting means is provided comprising a front mounting means (30) and a rear mounting means (31).

8. An agricultural machine as claimed in any one of the preceding claims wherein the cutterhead (14) has less than 5 blades.

9. An agricultural machine as claimed in claim 8 wherein the cutterhead (14) as 3 blades.

10. An agricultural machine as claimed in any one of the preceding claims wherein feed rollers (16, 18) supply crop to the cutterhead (14) the feed rollers being connected to a further gearbox (2b) for controlling the length of chop of the crop.

11. An agricultural machine as claimed in any one of the preceding claims wherein the machine has means for automatic sharpening of blades of the cutterhead.

12. An agricultural machine as claimed in claim 11 wherein the machine is provided with a separate motor (20) for sharpening of the blades of the cutterhead (14), the separate motor providing a high speed of rotation for reversal of the cutterhead by means of a reverse gearbox (24).

13. An agricultural machine as claimed in claim 11 or claim 12 wherein the separate motor (20) is linked to a side of the cutterhead (14) remote from the main drive shaft (6).

14. An agricultural machine as claimed in claim 11, 12 or 13 wherein a means (40) for mounting the sharpener (47) and motor (20) is provided in the machine, the mounting means having slotted holes (42) therein to enable the sharpeners (47) to be adjusted in position.

15. An agricultural machine as claimed in any one of the preceding claims, wherein the machine is selected from a pull-type harvester or a self-propelled harvester.

16. An agricultural machine as claimed in claim 1 wherein the machine is adapted by means of a kit of parts comprising a relatively smaller length shaft (6) for replacing the main shaft of a conventional agricultural crop cutting machine and a transmission reduction gear box (2) and clutch (4).

17. A method of adapting a conventional harvester to a harvester suitable for cutting a fibre crop, the method comprising the steps of removing a main drive shaft from the harvester, replacing the shaft with a smaller length shaft (6) relative to the main drive shaft and connecting the smaller shaft to a gearbox (2) for reduction in the speed of output.

18. A method of harvesting a crop comprising the steps of cutting the crop into sections of at least 100mm in length, leaving the crop to ret and baling the crop.

19. A method as claimed in claim 18, wherein the crop is cut to a maximum length of 900mm.

20. A method as claimed in claim 19 wherein the crop is cut to a length between 300 to 600mm.
